# EUROPÄISCHE PATENTANMELDUNG

(11) **EP 2 505 895 A1**
(43) Veröffentlichungstag der Anmeldung: **03.10.2012**
(21) Anmeldenummer: 11160884.0
(22) Anmeldetag: 01.04.2011
(51) Int. Cl.: F16L 29/04, F16L 37/35

(54) **Kupplungsteil einer Druckmittel-Leitungskupplung**

(71) Anmelder: Voswinkel Entwicklungs- und Verwaltungs-GmbH & Co. KG, 58540 Meinerzhagen (DE)
(72) Erfinder: Ginczek, Christoph, 51709, Marienheide (DE); Firus, Artur, 58638, Iserlohn (DE)
(74) Vertreter: Patentanwälte Dr. Solf & Zapf

(57) **Zusammenfassung**

Die vorliegende Erfindung betrifft ein Kupplungsteil (4) einer - aus zwei zusammensteckbaren und sich dabei selbsttätig gegenseitig öffnende Schließventile (6, 8) aufweisenden Kupplungsteilen (2, 4) bestehenden - Druckmittel-Leitungskupplung (1), mit einem Kupplungsgehäuse (12) und einem darin einendig ortsfest befestigten, sich mit einem gegenüberliegenden freien Stößelende (14a) - bezogen auf eine Kupplungsachse (16) - axial in Richtung einer vorderen Kupplungsseite erstreckenden Stößel (14). Der Stößel (14) weist einen von einem hinteren Leitungsanschluss (20) ausgehenden Fluidkanal (22) mit mindestens einer im Bereich hinter dem freien Stößelende (14a) angeordneten Queröffnung (24) auf, wobei das Schließventil (8) einen hülsenförmigen, koaxial auf dem Stößel (14) sitzenden und derart axial beweglich geführten Ventilkörper (26) aufweist, dass dieser beim Kuppelvorgang durch Anlage an dem anderen Kupplungsteil (2) aus einer vorderen, die Queröffnung (24) des Fluidkanals (22) verschließenden Schließstellung selbsttätig gegen eine Schließfederkraft in eine hintere, die Queröffnung (24) des Fluidkanals (22) öffnende Öffnungsstellung bewegbar ist. Der hülsenförmige Ventilkörper (26) weist in seinem hinteren Bereich ein Anschlagelement (32) auf, das in der Schließstellung innerhalb des Kupplungsgehäuses (12) in eine die Schließbewegung begrenzende Endanschlagstellung gelangt.

## Beschreibung

Die vorliegende Erfindung betrifft gemäß dem Oberbegriff des Anspruchs 1 eines von zwei Kupplungsteilen einer Druckmittel-Leitungskupplung, wobei das Kupplungsteil mit einem zweiten Kupplungsteil zusammensteckbar ist und ein sich dabei selbsttätig öffnendes Schließventil aufweist, wobei das Kupplungsteil ein Kupplungsgehäuse und einen darin einendig ortsfest befestigten, sich mit einem gegenüberliegenden freien Stößelende - bezogen auf eine Kupplungsachse - axial in Richtung einer vorderen Kupplungsseite erstreckenden Stößel aufweist, der einen von einem hinteren Leitungsanschluss ausgehenden Fluidkanal mit mindestens einer im Bereich hinter dem freien Stößelende angeordneten Queröffnung aufweist, wobei das Schließventil einen hülsenförmigen, koaxial auf dem Stößel sitzenden und derart axial beweglich geführten Ventilkörper aufweist, dass dieser beim Kuppelvorgang durch Anlage an dem anderen Kupplungsteil aus einer vorderen, die Queröffnung des Fluidkanals überdeckenden und dadurch verschließenden Schließstellung selbsttätig gegen eine Schließfederkraft in das Kupplungsgehäuse hinein in eine hintere, die Queröffnung des Fluidkanals freigebende und dadurch öffnende Öffnungsstellung bewegbar ist.

Bei bekannten, derzeit eingesetzten Kupplungsteilen der beschriebenen, gattungsgemäßen Art weist der Stößel, der beim Kuppelvorgang das Schließventil des anderen Kupplungsteils öffnet, an seinem freien, vorderen Stößelende einen radial nach außen ragenden Ringsteg auf, der als Endanschlag für den hülsenförmigen Ventilkörper in dessen Schließstellung fungiert. Der Ventilkörper weist an seinem vorderen Endbereich eine radial nach innen und nach vorne offene Ringausnehmung auf, in der ein Dichtring sitzt. Dieser Dichtring sitzt somit in der Ventil-Schließstellung axial zwischen dem Ringsteg des Stößels und der Ringausnehmung des Ventilkörpers, so dass er mechanisch mit einer Schließkraft beaufschlagt wird. Da im praktischen

Einsatz in aller Regel das Kupplungsteil im geschlossenen Zustand, d. h. im entkuppelten Zustand der Leitungskupplung, mit einem leitungsseitigen Hydraulikdruck beaufschlagt ist, kann die Schließkraft sehr hohe Werte erreichen, weil der Ventilkörper zusätzlich zu der Schließfederkraft auch mit einer druckabhängigen Kraft beaufschlagt wird. Diese Kraft resultiert daraus, dass eine rückwärtige Oberfläche des Ventilkörpers mit dem Hydraulikdruck beaufschlagt wird. Dadurch entsteht nach der Beziehung Kraft gleich Druck mal Fläche (F = p · A) eine entsprechend hohe Kraft. Die gesamte jeweils wirkende Schließkraft muss bei der bekannten Ausführung des Kupplungsteils über die vordere Dichtung sowie den äußeren Ringsteg des Stößels aufgenommen bzw. abgestützt werden. Es werden deshalb auch bereits spezielle Dichtringe eingesetzt, die aus einem metallischen Käfigteil mit einer elastischen Einlage bestehen. Dennoch kann es bei hohem Druck zu Störungen und Schäden im Dichtungsbereich kommen. Schlimmstenfalls kann es auch zu einem Bruch des Stößels kommen, indem dessen Ende mit dem äußeren Ringsteg abreißt. Dies führt zu einem Totalausfall des Kupplungsteils.

Der vorliegenden Erfindung liegt daher die Aufgabe zu Grunde, ein Kupplungsteil der beschriebenen, gattungsgemäßen Art zu schaffen, das für einen erhöhten Druck ausgelegt ist und trotzdem eine erhöhte Betriebssicherheit zur Vermeidung von Störungen und Schäden, dabei aber auch eine einfache Herstellung und Montage gewährleistet.

Erfindungsgemäß wird dies gemäß dem unabhängigen Anspruch 1 dadurch erreicht, dass der hülsenförmige Ventilkörper in seinem hinteren Bereich ein Anschlagelement aufweist, das in der Schließstellung innerhalb des Kupplungsgehäuses in eine mechanische, die Schließbewegung begrenzende Endanschlagstellung gelangt. Durch diesen hinteren mechanischen Endanschlag wird vorteilhafterweise vermieden, dass der vordere Bereich der Ventilkörper-Dichtung und des Stößels mit einer Schließkraft beaufschlagt wird. Der davon unabhängige hintere Anschlag kann so ausgelegt sein, dass er zur Abstützung auch bei hohen Kräften und Drücken geeignet ist, so dass Schäden vermieden werden. Das Kupplungsteil kann dadurch für einen hohen Betriebsdruck von bis zu 560 bar ausgelegt sein, und zwar vorteilhafterweise mit einer mehrfachen Sicherheit für den Berstdruck.

Weitere vorteilhafte Ausgestaltungsmerkmale der Erfindung sind in den abhängigen Ansprüchen und der anschließenden Beschreibung enthalten.

Anhand der Zeichnung und darin veranschaulichter, bevorzugter Ausführungsbeispiele soll die Erfindung im Folgenden genauer erläutert werden. Es zeigen:
- Fig. 1: ein erfindungsgemäßes Kupplungsteil im Axialschnitt in der VentilSchließstellung,
- Fig. 2: eine Darstellung analog zu Fig. 1, jedoch in der Ventil-Öffnungsstellung, und
- Fig. 3: eine halb-axial geschnittene Seitenansicht einer alternativen Ausführungsform des erfindungsgemäßen Kupplungsteils in einem mit einem zugehörigen zweiten Kupplungsteil gekuppelten Zustand.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

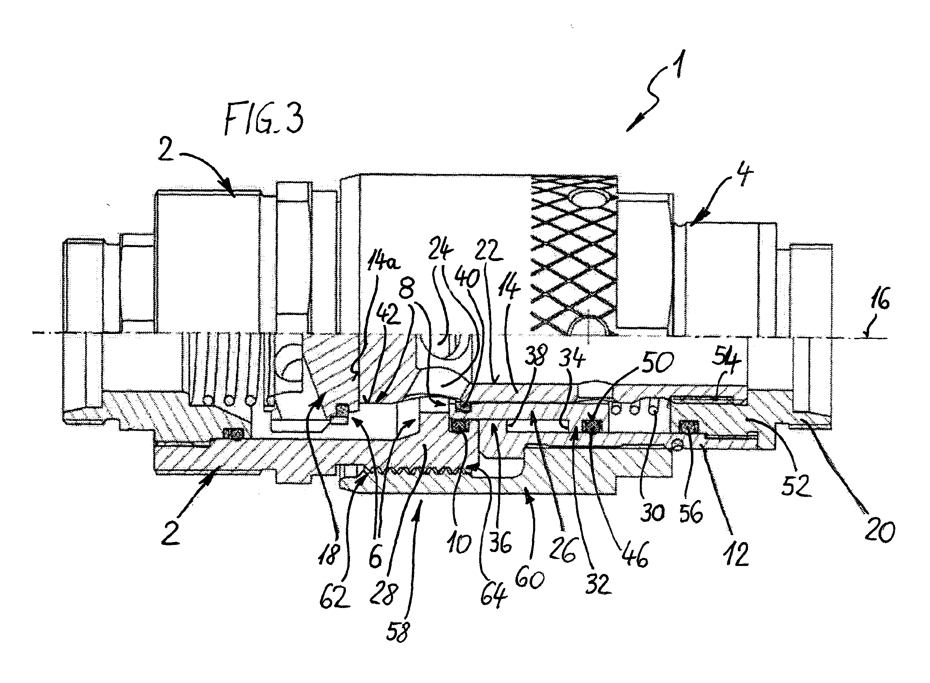

Einleitend sei zunächst auf die Fig. 3 verwiesen, in der eine Druckmittel-Leitungskupplung 1 in einem gekuppelten Zustand dargestellt ist. Diese Leitungskupplung 1 besteht aus zwei zusammensteckbaren Kupplungsteilen 2, 4, die auf ihren voneinander abgewandten Seiten mit nicht dargestellten DruckmittelLeitungen, insbesondere Hydraulikleitungen, verbunden bzw. zu verbinden sind. Die Kupplungsteile 2, 4 enthalten jeweils ein federbelastetes Schließventil 6, 8, um in einem getrennten, entkuppelten Zustand die jeweils angeschlossene DruckmittelLeitung selbsttätig druckdicht zu verschließen. Während des Kuppelvorgangs beim Zusammenstecken der Kupplungsteile 2, 4 öffnen sich die Schließventile 6, 8 durch bereichsweise gegenseitige Anlage selbsttätig, um den Durchgang für das jeweilige durch die Leitung strömende Medium freizugeben.

Die vorliegende Erfindung betrifft nun eines der zwei Kupplungsteile, und zwar insbesondere das als Kupplungsstecker 4 ausgebildete Kupplungsteil, wobei das andere Kupplungsteil als Kupplungsmuffe 2 ausgebildet ist. Der Kupplungsstecker 4 ist bereichsweise in die Kupplungsmuffe 2 einsteckbar, wobei eine umfangsgemäße Abdichtung über eine Dichtung 10 innerhalb der Kupplungsmuffe 2 erfolgt.

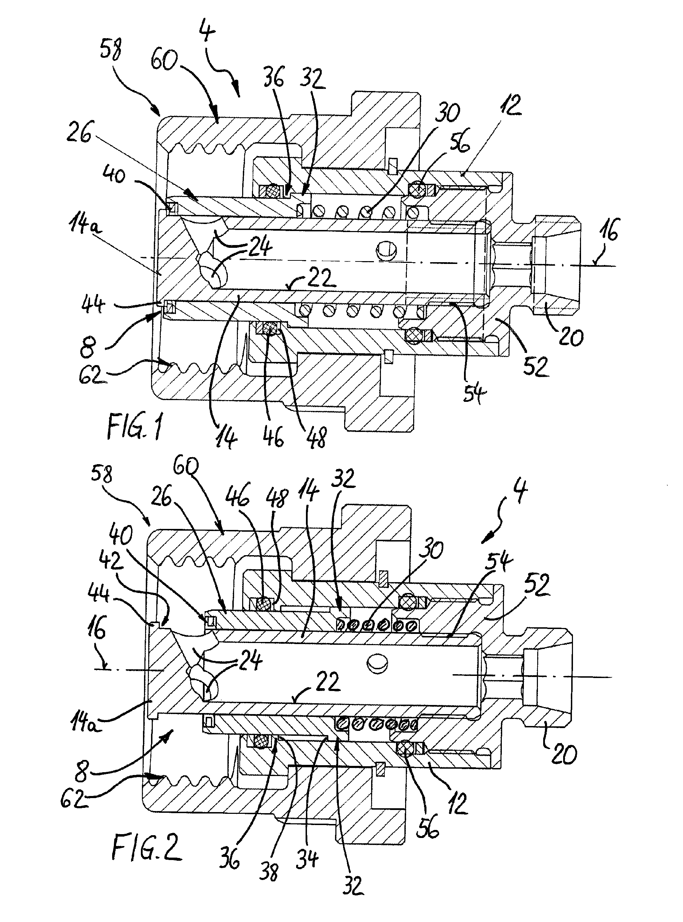

Was nun das erfindungsgemäße Kupplungsteil 4 betrifft, so soll dieses anhand der Fig. 1 und 2 genauer beschrieben werden.

Das Kupplungsteil 4 weist ein Kupplungsgehäuse 12 und einen darin einendig ortsfest befestigten Stößel 14 auf, der sich von seinem im Kupplungsgehäuse 12 befestigten Ende mit einem gegenüberliegenden freien Stößelende 14a - bezogen auf eine Kupplungsachse 16 - axial in Richtung einer vorderen Kupplungsseite erstreckt. Dieser fest stehende Stößel 14 dient einerseits dazu, beim Kupplungsvorgang - siehe dazu nochmals Fig. 3 - einen Ventilkörper 18 des anderen Kupplungsteils 2 in eine Öffnungsstellung zu bringen. Andererseits weist der Stößel 14 einen von einem hinteren Leitungsanschluss 20 ausgehenden Fluidkanal 22 mit bevorzugt mehreren im Bereich hinter dem freien Stößelende 14a angeordneten Queröffnungen 24 auf. Das Schließventil 8 des erfindungsgemäßen Kupplungsteils 4 weist einen hülsenförmigen, koaxial auf dem Stößel 14 sitzenden und derart axial beweglich geführten Ventilkörper 26 auf, dass dieser beim Kuppelvorgang - vgl. nochmals Fig. 3 - durch Anlage an einem Kupplungsgehäuse 28 des anderen Kupplungsteils 2 aus einer vorderen, die Queröffnungen 24 des Fluidkanals 22 überdeckenden und dadurch verschließenden Schließstellung (Fig. 1) selbsttätig gegen eine Schließfederkraft in das Kupplungsgehäuse 12 hinein in eine hintere, die Queröffnungen 24 des Fluidkanals 22 freigebende und dadurch öffnende Öffnungsstellung (Fig. 2 und 3) bewegbar ist. Die Schließfederkraft wird von einer - bevorzugt als Schraubendruckfeder ausgebildeten - Schließfeder 30 erzeugt, die axial zwischen dem hülsenförmigen Ventilkörper 26 und einem rückseitigen Widerlager innerhalb des Kupplungsgehäuses 12 angeordnet ist.

Erfindungsgemäß weist nun der hülsenförmige Ventilkörper 26 in seinem hinteren Bereich ein Anschlagelement 32 auf, welches in der Schließstellung innerhalb des Kupplungsgehäuses 12 in eine mechanische Endanschlagstellung gelangt. Durch diesen Endanschlag wird der Ventilkörper 26 gegen eine Schließkraft abgestützt, die sich aus der Federkraft der Schließfeder 30 und einer druckabhängigen Kraft zusammensetzt, die durch Beaufschlagung einer effektiven hinteren Stirnfläche des Ventilkörpers 26 mit dem jeweiligen Druck des im Leitungssystem befindlichen Druckmediums entsteht.

In den dargestellten, bevorzugten Ausführungsbeispielen ist das Anschlagelement 32 des Ventilkörpers 26 von einem umfangsgemäßen, im Durchmesser über eine Ringstufe 34 vergrößerten Ringstegansatz gebildet. Hierbei ist innerhalb des Kupplungsgehäuses 12 ein radial nach innen ragender Ringsteg 36 mit einer radialen Stufenfläche 38 als Gegenanschlag für das Anschlagelement 32 bzw. dessen Ringstufe 34 angeordnet. Dazu wird insbesondere auf Fig. 2 und 3 verwiesen.

Alternativ zu dieser bevorzugten Ausführung kann der Endanschlag auch im inneren Bereich des Ventilkörpers 26 zwischen diesem und dem Stößel 14 gebildet sein (nicht dargestellt).

Der Ventilkörper 26 weist in seinem vorderen Endbereich eine Umfangsdichtung 40 auf, die in der Schließstellung (Fig. 1) mit einer Dichtfläche 42 (siehe dazu insbesondere Fig. 2 und 3) im Bereich zwischen dem freien Stößelende 14a und den Queröffnungen 24 zusammenwirkt. Da der Bereich der Umfangsdichtung 40 durch den erfindungsgemäßen Endanschlag des Ventilkörpers 26 nicht mit einer axialen Schließkraft beaufschlagt wird, kann die Umfangsdichtung 40 beliebig als Axial-und/oder Radialdichtung ausgebildet sein. Gemäß Fig. 1 und 2 kann beispielsweise der Stößel 14 am freien vorderen Stößelende 14a einen radial nach außen ragenden Ringsteg 44 aufweisen. Die am freien Ende des Ventilkörpers 26 gehalterte Umfangsdichtung 40 kann dann axial mit dem Ringsteg 44 und/oder radial mit dem an den Ringsteg 44 angrenzenden Umfangsbereich des Stößels 14 zusammenwirken.

Bei dem Ausführungsbeispiel gemäß Fig. 3 ist das freie Stößelende 14a vollständig zylindrisch und somit ohne äußeren Ringsteg ausgebildet, wobei die Umfangsdichtung 40 als Radialdichtung in einer inneren Ringnut innerhalb des Ventilkörpers 26 sitzt.

Zusätzlich zu der Umfangsdichtung 40 ist zur druckdichten Abdichtung nach außen in einem zwischen dem Ventilkörper 26 und dem Kupplungsgehäuse 12 gebildeten Ringspalt eine Hauptdichtung 46 angeordnet. Bei der Ausführung gemäß Fig. 1 und 2 ist diese Hauptdichtung 46 innerhalb einer inneren, radial nach innen offenen Dichtungsnut 48 des Kupplungsgehäuses 12 angeordnet, wobei die Dichtungsnut 48 im Bereich einer vorderen Durchgangsöffnung des Kupplungsgehäuses 12 gebildet ist. Dabei erstreckt sich der hülsenförmige Ventilkörper 26 durch die Hauptdichtung 46 hindurch aus dem Kupplungsgehäuse 12 nach außen.

Bei der in Fig. 3 veranschaulichten Alternative ist die Hauptdichtung 46 innerhalb einer im hinteren Bereich des Ventilkörpers 26 gebildeten, radial nach außen offenen Dichtungsnut 50 angeordnet.

In weiterer vorteilhafter Ausgestaltung ist das Kupplungsgehäuse 12 in seinem hinteren Bereich lösbar mit einem den Leitungsanschluss 20 aufweisenden und eine Gehäuse-Montageöffnung verschließenden Anschlussteil 52 verbunden. Hierdurch kann die Montage der inneren Bestandteile trotz des erfindungsgemäßen Anschlagelementes 32 des Ventilkörpers 26 auf einfache Weise erfolgen, und zwar von hinten durch die mit dem Anschlussteil 52 verschließbare Montageöffnung. An dem Anschlussteil 52 wird hierbei auch der Stößel 14 befestigt, und zwar über eine Gewindeverbindung 54. Zweckmäßig wird der Stößel 14 mit einem endseitigen Außengewinde in ein Innengewinde des Anschlussteils 52 eingeschraubt. Auch das Anschlussteil 52 selbst wird mit einem Außengewinde in ein Innengewinde des Kupplungsgehäuses 12 eingeschraubt. Zur Abdichtung ist eine Dichtung 56 vorgesehen. Zudem bildet das Anschlussteil 52 auch das Widerlager für die Schließfeder 30.

Das separate Anschlussteil 52 führt zu dem zusätzlichen Vorteil einer einfachen Anpassung an unterschiedliche Leitungsanschlüsse 20, indem nur verschiedene Anschlussteile 52 nach Art von Adaptern bereitgestellt zu werden brauchen.

Außerdem sind geeignete Verriegelungsmittel 58 zum lösbaren Verriegeln der Kupplungsteile 2, 4 in der steckgekuppelten Kupplungslage gemäß Fig. 3 vorgesehen. In den dargestellten, bevorzugten Ausführungen sind die Verriegelungsmittel 58 von einer außen drehbar auf dem Kupplungsgehäuse 12 des erfindungsgemäßen Kupplungsteils 4, d. h. bevorzugt des Kupplungssteckers, sitzenden Überwurfmutter 60 gebildet. Diese Überwurfmutter 60 ist mit einem Innengewinde 62 auf ein Außengewinde 64 des anderen Kupplungsteils 2, bevorzugt der Kupplungsmuffe, aufschraubbar.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Kupplungsteil (4) einer - aus zwei zusammensteckbaren und sich dabei selbsttätig gegenseitig öffnende Schließventile (6, 8) aufweisenden Kupplungsteilen (2, 4) bestehenden - Druckmittel-Leitungskupplung (1), mit einem Kupplungsgehäuse (12) und einem darin einendig ortsfest befestigten, sich mit einem gegenüberliegenden freien Stößelende (14a) - bezogen auf eine Kupplungsachse (16) - axial in Richtung einer vorderen Kupplungsseite erstreckenden Stößel (14), der einen von einem hinteren Leitungsanschluss (20) ausgehenden Fluidkanal (22) mit mindestens einer im Bereich hinter dem freien Stößelende (14a) angeordneten Queröffnung (24) aufweist, wobei das Schließventil (8) einen hülsenförmigen, koaxial auf dem Stößel (14) sitzenden und derart axial beweglich geführten Ventilkörper (26) aufweist, dass dieser beim Kuppelvorgang aus einer vorderen, die Queröffnung (24) des Fluidkanals (22) verschließenden Schließstellung selbsttätig gegen eine Schließfederkraft in eine hintere, die Queröffnung (24) des Fluidkanals (22) öffnende Öffnungsstellung bewegbar ist,
**dadurch gekennzeichnet, dass** der hülsenförmige Ventilkörper (26) in seinem hinteren Bereich ein Anschlagelement (32) aufweist, das in der Schließstellung innerhalb des Kupplungsgehäuses (12) in eine Endanschlagstellung gelangt.

2. Kupplungsteil nach Anspruch 1,
**dadurch gekennzeichnet, dass** der Ventilkörper (26) in seinem vorderen Endbereich eine Umfangsdichtung (40) aufweist, die in der Schließstellung zur umfangsgemäßen Abdichtung mit einer Dichtfläche (42) des Stößels (14) im Bereich zwischen dem freien Stößelende (14a) und der Queröffnung (24) des Fluidkanals (22) zusammenwirkt.

3. Kupplungsteil nach Anspruch 2,
**dadurch gekennzeichnet, dass** die Umfangsdichtung (40) als Axial- und/oder Radialdichtung ausgebildet ist.

4. Kupplungsteil nach einem der Ansprüche 1 bis 3,
**dadurch gekennzeichnet, dass** das Anschlagelement (32) des Ventilkörpers (26) von einem umfangsgemäßen, im Durchmesser über eine Ringstufe (34) vergrößerten Ringstegansatz gebildet ist.

5. Kupplungsteil nach einem der Ansprüche 1 bis 4,
**dadurch gekennzeichnet, dass** innerhalb des Kupplungsgehäuses (12) ein radial nach innen ragender Ringsteg (36) als Gegenanschlag für das Anschlagelement (32) des Ventilkörpers (26) angeordnet ist.

6. Kupplungsteil nach einem der Ansprüche 1 bis 5,
**dadurch gekennzeichnet, dass** in einem zwischen dem Ventilkörper (26) und dem Kupplungsgehäuse (12) gebildeten Ringspalt eine Hauptdichtung (46) angeordnet ist.

7. Kupplungsteil nach Anspruch 6,
**dadurch gekennzeichnet, dass** die Hauptdichtung (46) innerhalb einer im Bereich einer vorderen Durchgangsöffnung des Kupplungsgehäuses (12) gebildeten, radial nach innen offenen Dichtungsnut (48) angeordnet ist.

8. Kupplungsteil nach Anspruch 6,
**dadurch gekennzeichnet, dass** die Hauptdichtung (46) innerhalb einer im hinteren Bereich des Ventilkörpers (26) gebildeten, radial nach außen offenen Dichtungsnut (50) angeordnet ist.

9. Kupplungsteil nach einem der Ansprüche 1 bis 8,
**dadurch gekennzeichnet, dass** das Kupplungsgehäuse (12) in seinem hinteren Bereich lösbar mit einem den Leitungsanschluss (20) aufweisenden, eine Gehäuse-Montageöffnung verschließenden Gehäuse-Anschlussteil (52) verbunden ist.

10. Kupplungsteil nach einem der Ansprüche 1 bis 9,
**gekennzeichnet durch** eine Ausgestaltung als Kupplungsstecker (4), wobei der Stößel (14) mit dem vorderen Ende des Ventilkörpers (26) in eine Aufnahmeöffnung des anderen, als Kupplungsmuffe (2) ausgebildeten Kupplungsteils einsteckbar ist.

11. Kupplungsteil nach einem der Ansprüche 1 bis 10,
**gekennzeichnet durch** Verriegelungsmittel (58) zum lösbaren Verriegeln der Kupplungsteile (2, 4) in der steckgekuppelten Kupplungslage, wobei vorzugsweise die Verriegelungsmittel (58) von einer außen auf dem Kupplungsgehäuse (12) sitzenden Überwurfmutter (60) gebildet sind, wobei die Überwurfmutter (60) mit einem Innengewinde (62) auf ein Außengewinde (64) des anderen Kupplungsteils (2) aufschraubbar ist.
